(19) **Europäisches Patentamt**
**European Patent Office**
**Office européen des brevets**

(11) **EP 0 588 388 B1**

(12) **EUROPEAN PATENT SPECIFICATION**

(45) Date of publication and mention
of the grant of the patent:
**04.06.1997 Bulletin 1997/23**

(51) Int Cl.⁶: **H02P 7/628**, H02M 7/5387,
H02H 7/08

(21) Application number: **93119717.2**

(22) Date of filing: **30.08.1989**

(54) **Current-limiting system for voltage-type inverter**

System zum Begrenzung des Stromes eines Spannungsumrichters

Système pour limiter le courant d'un onduleur de tension

(84) Designated Contracting States:
**CH DE GB IT LI**

(30) Priority: 30.08.1988 JP 215585/88
12.12.1988 JP 313497/88
19.12.1988 JP 320118/88
06.03.1989 JP 53521/89
29.05.1989 JP 135045/89
23.06.1989 JP 162270/89

(43) Date of publication of application:
**23.03.1994 Bulletin 1994/12**

(62) Application number of earlier application in
accordance with Art. 76 EPC: **89909852.9**

(73) Proprietor: **FUJI ELECTRIC CO., LTD.**
**Kawasaki-shi Kanagawa 210 (JP)**

(72) Inventors:
• **Minowa, Hirofumi, c/o Fuji Electric Co., Ltd.**
**Kawasaki-shi, Kanagawa 210 (JP)**

• **Yamazoe, Masaru, c/o Fuji Electric Co., Ltd.**
**Kawasaki-shi, Kanagawa 210 (JP)**
• **Yanase, Takao, c/o Fuji Electric Co., Ltd.**
**Kawasaki-shi, Kanagawa 210 (JP)**
• **Ishii, Shin'ichi', c/o Fuji Electric Co., Ltd.**
**Kawasaki-shi, Kanagawa 210 (JP)**
• **Nagao, Yoshinobu, c/o Fuji Electric Co., Ltd.**
**Kawasaki-shi, Kanagawa 210 (JP)**

(74) Representative: **Blumbach, Kramer & Partner**
**Patentanwälte**
**Radeckestrasse 43**
**81245 München (DE)**

(56) References cited:
**EP-A- 0 010 980       EP-A- 0 075 357**
**EP-A- 0 275 633**

• **DATABASE WPI Section EI, Week 8839, Derwent**
**Publications Ltd., London, GB; Class U24, AN**
**88-273715 & JP-A-63 198 523**

## Description

The present invention relates to a current-limiting apparatus for a voltage-type inverter, and more particularly to a current-limiting apparatus that limits the output current of the inverter which increases in response to any changes in the frequency set value or any unexpected or sudden changes in the load of the inverter.

JP-A-62-141997 discloses a current limiting system for an inverter in which a zero vector interruption circuit is provided. When the inverter output current exceeds a predetermined limiting value, the zero vector interruption circuit suppresses the current increase by setting the inverter output voltage to a zero vector mode. When the inverter output current returns to a value below the limiting value, the system returns to the normal control mode.

US-A-4 722 042 discloses a method for controlling the current of an inverter in which the direction of change of the position of the end of a current deviation vector and a presently set switching mode are detected. When the detected current deviation change direction does not belong to a predetermined reference change direction range, the switching mode is changed to a switching mode having a reference change direction range corresponding to the detected current deviation change direction and being determined in accordance with the presently output voltage vector.

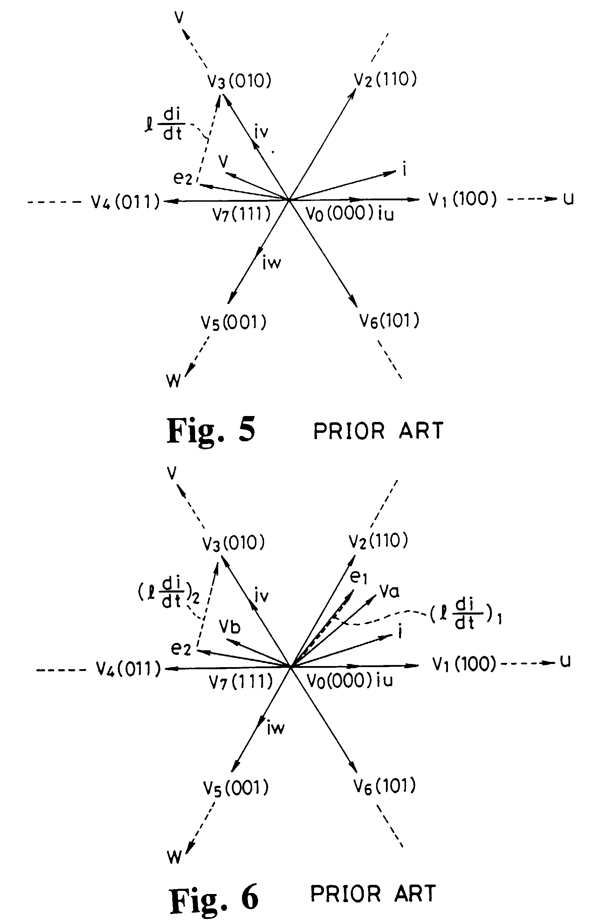

In Japanese Patent Application Laying-Open No. 62-123965, a current-limiting system is proposed that can be used in voltage-type PWM (pulse-width modulation) control inverters. An example of the principal circuit of a PWM control inverter to which the current-limiting system may be applied is shown in Fig. 4. In Fig. 4, $E_1$ designates a dc (direct current) power supply, INV, an inverter, $Tr_1$ to $Tr_6$, transistors, $D_1$ to $D_6$, feedback diodes that have inverse-parallel connections across the transistors $Tr_1$ to $Tr_6$, and IM denotes a three-phase induction motor (which will be simply referred to as "motor") that serves as a load.

The inverter INV provides a constant V/f (Voltage/Frequency) control in the known manner: the appropriate command value for the output voltage of the inverter INV is generated based on the frequency set value for the output voltage; this command value is compared with a carrier waveform so that a PWM signal may be produced; and this PWM signal enables the transistors $Tr_1$ to $Tr_6$ to provide an output voltage of the inverter INV that meets the requirements specified by the output voltage command value mentioned above.

The output current limiting system for the inverter INV is provided with a current transformer or the like to measure the magnitude of currents iu, iv, and iw of respective phases (u, v, w), in order to determine that any of the currents exceed their specific limit value. If one of the phase currents iu, iv, and iw exceeds its positive limit value, the transistor in the upper arm for that phase is turned off, whereas if one of the currents exceeds its negative limit value, the transistor in the lower arm for the phase is turned off. This current-limiting system will be described more specifically below.

First, it is assumed that respective phase currents are positive when they flow in the direction shown in Fig. 4, in the case where the motor IM is driven by the inverter INV. Then, it is also assumed that each pair of transistors $Tr_1$ and $Tr_4$, transistors $Tr_2$ and $Tr_5$, transistors $Tr_3$ and $Tr_6$, in the upper and lower arms that forms a phase u, a phase v, and a phase w, respectively, has a switching pattern represented by (Su, Sv, Sw). It is noted that the corresponding transistors in the upper arm are in the ON state when Su, Sv and Sw assume the value of "1", respectively, whereas the corresponding transistors in the lower arm are in the ON state when Su, Sv and Sw assume the value of "0", respectively.

If the current of the phase u exceeds its positive limit value when the switching pattern is (1 0 0) (which means that transistors $Tr_1$, $Tr_5$ and $Tr_6$ are in the ON state), the switching pattern for the phase u will be forced to change from "1" to "0". Changing the switching pattern to (0 0 0) causes the transistor $Tr_1$, in the upper arm for the phase u to turn off, decreasing the u-phase current flow. Changing the switching pattern from "1" to "0" with regard to u-phase means to turn off the transistor $Tr_1$ in the upper arm while turning on the transistor $Tr_4$ in the lower arm. Turning the transistor $Tr_1$ off when the current flows in the positive direction makes the current to flow through the transistors in the lower arms of the other phases and through the diode $D_4$ in the lower arm of the u-phase. Therefore, the fact that the transistor $Tr_4$ is turned on has no significant meaning. Rather, turning off the transistor $Tr_1$ of the upper arm makes the current flow decrease.

If the u-phase current flow exceeds its negative limit value, the transistor $Tr_4$ is turned off, thus decreasing the current flow.

The rate of change of the current vector i flowing through the motor IM can be obtained from the output voltage vector **V** of the inverter INV, the counter electromotive force vector e of the motor IM, and the motor leakage inductance $\ell$, and is approximately expressed by the following equation:

$$\ell \cdot di/dt = (V - e) \qquad (1)$$

The output voltage of the inverter INV shown in Fig. 4 can provide eight types of voltage vectors because there are eight ($2^3$) switching patterns. Those switching patterns can be represented by the respective voltage vectors consisting of the voltage vectors $\mathbf{V}_1$ to $\mathbf{V}_6$ and the zero voltage vectors $\mathbf{V}_0$, $\mathbf{V}_7$, which are spaced by every $\pi/3$ (rad) as shown in Fig. 5. Respective phase currents iu, iv and iw shown in Fig. 4 are also shown in Fig. 5.

To produce a desired voltage vector **V**, the PWM inverter INV described above forms an equivalent voltage vector **V** having the desired magnitude and angle: the voltage vectors adjacent to the voltage vector **V** and the zero voltage vectors **V**$_0$, **V**$_7$ (when the voltage vector **V** is located as indicated in Fig. 5, for example, the voltage vectors **V**$_3$, **V**$_4$ are adjacent to the vector **V**) are selected from the eight voltage vectors **V**$_0$ to **V**$_7$ in a time division manner within a specific time interval so as to produce the desired voltage vector **V**. Thus, the inverter INV may be controlled according to the switching patterns which correspond to the voltage vectors **V**$_3$, **V**$_4$, **V**$_0$ and **V**$_7$.

Referring now to the vector diagram in Fig. 6, let us consider the way the output current of the inverter is limited when the motor IM in Fig. 4 is driven by the inverter.

Let us suppose that the inverter selects the voltage vector **V**$_1$ (switching pattern of (1 0 0)) in a time division manner so as to produce output voltage **V**a in Fig. 6 while driving the motor IM, and that the u-phase current iu exceeds its positive limit value during this phase. In this case, the voltage vector **V**$_0$ corresponding to the switching pattern (0 0 0) in which Su is set to "0" is selected. As a result, the direction of di/dt will be that of ($\ell$ · di/dt)$_1$, being determined by the above equation (1), the counter-electromotive force **e**1 and **V**$_0$. This will decrease the u-phase current iu.

On the other hand, let us suppose that the inverter INV selects the voltage vector **V**$_3$ (the switching pattern (0 1 0)) in a time division manner to produce output voltage **V**$_b$ while braking the motor IM, and that the u-phase current iu exceeds its positive limit value at that time. In this case, the conventional system changes the u-phase Su of the switching pattern to "0". However, the Su in this pattern is originally "0", and so the switching pattern remains (0 1 0). In other words, this switching pattern continues to provide output voltage **V**$_3$. The direction of di/dt, in this case, will be that of ($\ell$ · di/dt)$_2$, being determined by the above equation (1), the counter electromotive force **e**$_2$ and **V**$_3$. This direction possesses the positive component of the u-phase current iu. This presents the problem that the current iu cannot be limited (or decreased) by the above method.

EP-A-0 010 980 discloses an overload protection circuitry for an electric motor driving circuit which comprises a first current detection circuit for detecting a maximum permissible current flowing to the driving circuit. The circuitry is such that when a maximum permissible current is detected, current delivery operation of the driving circuit is terminated by turning off current delivery transistors. The circuitry also has a second current detection circuit for detecting a preselected overcurrent value flowing from the driving circuit. When such a preselected overcurrent value is detected, current delivery from the driving circuit is limited by turning-off the current delivery transistors which are then repeatedly turned on and off by a pulse generator to pass a limited current. Therefore, when a momentary surge of input current to the driving circuit occurs the driving circuit is closed down to prevent damage. When the motor is overloaded, however, current continues to pass to the motor but is limited so as not to cause damage.

The present invention is proposed to solve the above-described problems. The object of the present invention is to provide a current-limiting apparatus for use in the voltage-type inverter, which ensures that the output current can be decreased during driving or braking the motor, regardless of the location of the selected voltage vector.

To accomplish the above object, the present invention provides a current limiting apparatus according to the claim.

According to the present invention, the output current of the inverter can be surely reduced when the current limit is activated: the rate of change of the output current vector functions so as to reduce the current flow regardless of the location of the counter electromotive force vector, or the location of the voltage vector selected at that time. This is because the voltage vector nearest to the vector having the opposite direction to the output current vector is outputted when the current limit action takes place.

The current limiting action is performed by the current limiting circuit means when the motor is being driven. In addition, when the motor is braked, all switching elements for the inverter are turned off, forcing the output current for each phase to be reduced.

| | |
|---|---|
| Fig. 1 | is a block diagram showing a current limiting circuit together with an inverter used in an embodiment of the present invention; |
| Fig. 2 | is a logic circuit diagram showing an example of the arrangement of an AND circuit shown in Fig. 1; |
| Fig. 3 | is a logic circuit diagram showing an example of the arrangement of a current limiting circuit; |
| Fig. 4 | is a circuit diagram showing a main circuit arrangement of the voltage-type inverter for explaining the relevant prior art; and |
| Figs. 5 and 6 | are voltage and current vector diagrams according to the relevant prior art, respectively. |

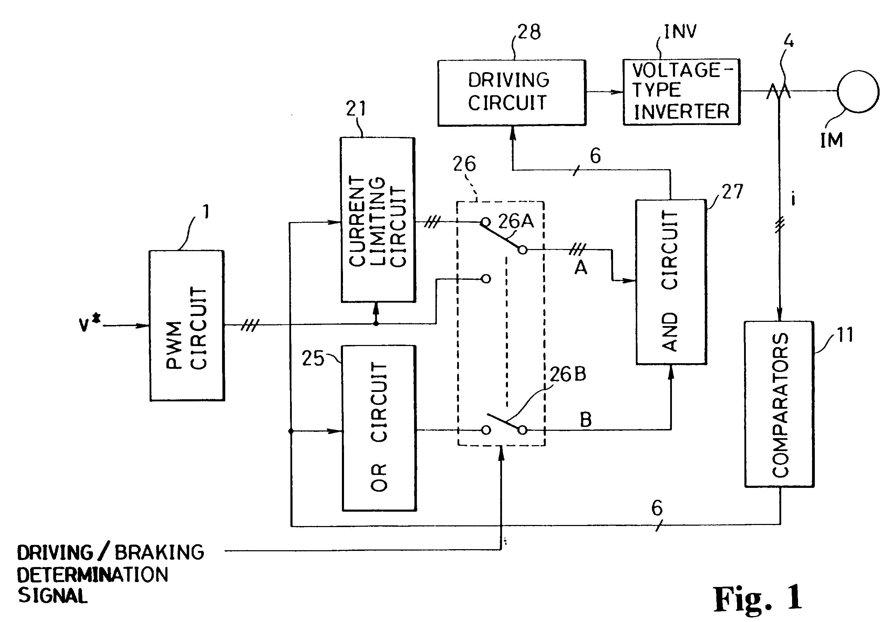

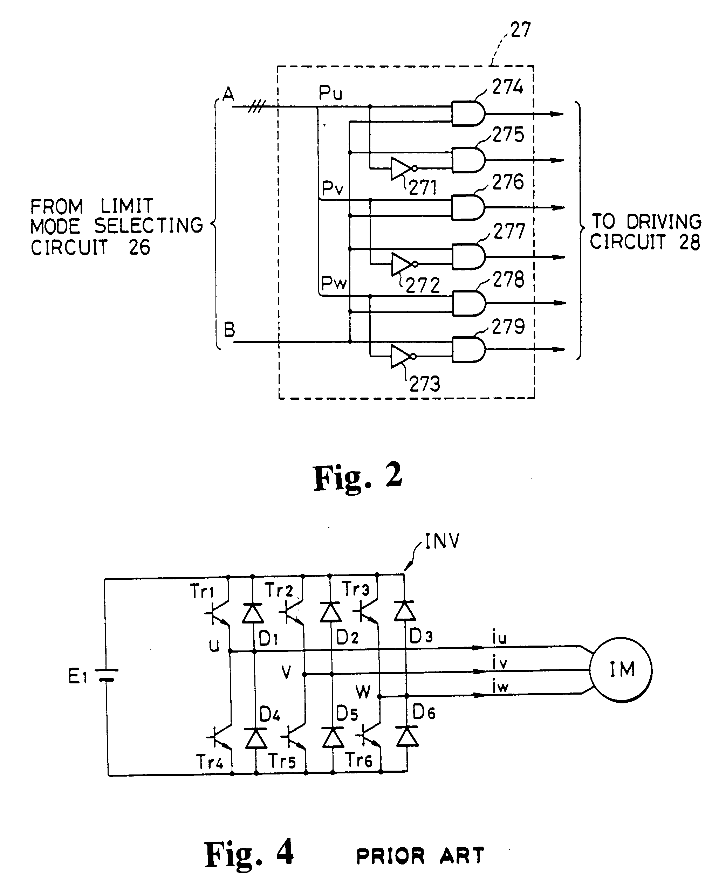

Figs. 1 and 2 show an embodiment of the present invention.

As described above, a first current limiting circuit 21 can limit the output current in an inverter INV when a motor IM is being driven. Likewise, the present invention can accomplish the current limiting action when the motor IM is being braked.

As one of the several alternative ways of protecting the voltage-type inverter against any possible unusual output currents by rapidly reducing the output current of the inverter INV, an all-phase-pulse-off method can be adapted: the drive pulses for the switching elements of all the phases in the inverter INV are uniformly turned off. This all-phase-pulse-off method, if carried out when the motor IM is being driven, will result in a greater rate of current reduction than that in the case where the first current limiting circuit 21 performs the current limiting action. This presents a new problem that the current ripple will be greater in the all-phase-pulse-off method than in the first current limiting circuit 21, when the switching time of the transistors used in the current limiting action by the all-phase-pulse-off method is set equal to that by the first current limiting circuit 21. The current flow should be maintained at its limit value during the current limiting action. Consequently, the all-phase-pulse-off method cannot be applied equally to both driving and braking the motor IM.

The present invention is achieved in light of the above facts: it adopts the current limiting action by the first current limiting circuit 21 when the motor IM is being driven; whereas it adopts the current limiting action by the all-phase-pulse-off method that uniformly turns off all the switching elements when the motor IM is being braked.

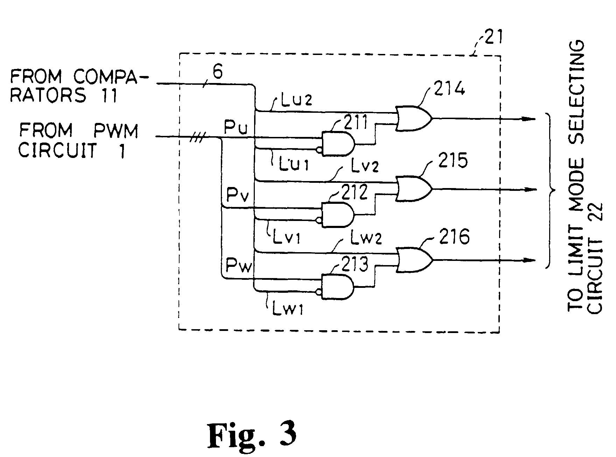

More specifically, referring to Fig. 1, a current detecting signal i from a current detecting circuit 4 is fed to comparators 11, which determine whether each phase current exceeds its positive of negative limit value or not. The comparators 11 provide six control signals to be fed to the current limiting circuit 21 having a similar configuration as the circuit shown in Fig. 3. All the six control signals will have the logical value "1" if all the phase currents exceed their limit values. Therefore, the first current limiting circuit 21 will pass the switching pattern from a PWM circuit 1 without changing it unless all the phase currents exceed their limit values when the motor is being driven or when the motor is being braked.

In contrast, when any one of the six control signals takes the logical value "1" while the motor is being braked, that is, when any one of the phase currents exceeds its positive or negative limit value, all-phase-pulse-off signal B of logical value "0" is produced from an OR gate 25 to which the six control signals from the comparators 11 are fed. Thus, all the switching elements are uniformly turned off.

The outputs of the OR gate 25 and current limiting circuit 21 are connected to a switching circuit 26 having switches 26A and 26B. This switching circuit 26 provides a switching pattern A or all-phase-pulse-off signal B by turning the switch 26A or 26B on according to the driving/braking determination signal. The driving/braking determination signal is a signal for determining the driving/braking status of the motor IM, and is provided from the microcomputer or any other similar processor for operating and producing the voltage command value V∗.

When the motor IM is being driven, the driving/braking determination signal will take logical value "1", and the switches 26A and 26B will have their respective positions as shown in Fig. 1. In this case, the switching circuit 26 produces switching pattern A consisting of the output from the PWM circuit 1 when none of the phase currents exceed their limit values, or the output from the current limiting circuit 21 when any one of the phase currents exceeds its limit value. On the other hand, when the motor IM is being braked, the driving/braking determination signal will have logical value "0", and the switches 26A and 26B will have their respective positions opposite to those shown in Fig. 1. In this case, the switching pattern from the PWM circuit 1 is directly outputted as the switching pattern A when none of the phase currents exceeds their limit values, whereas the all-phase-pulse-off signal B from the OR circuit 25 is produced when any of the phase currents exceeds its limit value as described above.

Those switching pattern A and all-phase-pulse-off signal B are applied to an AND-gate circuit 27 of the next stage. The OR circuit 25, switching circuit 26 and AND circuit 27 constitute an all-element-off circuit for turning all the switching elements off when the out-put current of any phase exceeds its positive or negative limit value.

The AND circuit 27 can be configured, for example, as shown in Fig. 2. The AND circuit 27 includes three NOT circuits 271, 271, and 273, AND gates 274, 276 and 278, and AND gates 275, 277 and 279. The input terminals of NOT circuits 271, 272 and 273 are connected to the output lines Pu, Pv and Pw of the switching pattern A, respectively. The first input terminals of the AND gates 274, 276 and 278 are connected to the output lines Pu, Pv and Pw, respectively. To the second input terminals of the AND gates 274, 276 and 278 is applied the all-phase-pulse-off signal B. The first input terminals of the AND gates 275, 277 and 279 are connected to the output terminals of the NOT circuit 271, 272 and 273, respectively. To the second input terminals of the AND gates 275, 277 and 279 is applied the all-phase-pulse-off signal B. The six AND outputs from the AND gates 274-279 are fed to the drive circuit 28 that drives the switching elements in the upper and lower arm for each phase in the inverter INV.

The operation of the embodiment will now be described in conjunction with the operation of the AND circuit 27 in Fig. 2.

When the motor IM is driven, the switches 26A and 26B in the switching circuit 26 are initially set at their respective positions as shown in Fig. 1, and so the current limit mode provided by the current limiting circuit 21 is selected. As described above, the switch 26A in the switching circuit 26 is connected to the current limiting circuit 21 or PWM circuit 1 according to the driving/braking determination signal. More specifically, when none of the phase currents exceeds the current limiting value, the switching pattern from the PWM circuit 1 is directly supplied to the AND circuit 27 as the switching pattern A via the current limiting circuit 21. On the other hand, if any phase current, u-phase current, for example, exceeds its positive limit value, the switching pattern produced from the current limiting circuit 21 is supplied to the AND circuit 27 as the switching pattern A so that the u-phase switching element in the upper arm is turned off. If the u-phase current exceeds the negative limiting value, the switching pattern produced from the current limiting circuit 21 is supplied to the AND circuit 27 as the switching pattern A so that the u-phase switching element in the lower arm is turned off.

If all the phase currents are within their limit values, the all-phase-pulse-off signal B from the OR circuit 25 takes the logical value "1", which is not transmitted to the AND gate 27 because the switch 26B is in its open state. However, the open state of the switch 26B provides the logical value "1", which is supplied to the AND gate 27. As a result, the AND circuit 27 produces six signals consisting of the above-described switching pattern A and the inverted signals of the pattern A, which are supplied to the drive circuit 28. The drive circuit 28, responding to those signals, drives the switching elements of each phase in the upper and lower arms. Thus, if the current exceeds its limit value during the motor IM is driven, the switching pattern A from the current limiting circuit 21 sets $\ell \cdot di/dt$ to $(\ell \cdot di/dt)_1$ in Fig. 6, thus ensuring the current reduction.

On the other hand, when the motor is braked, the switches 26A and 26B in the switching circuit 26 are placed at their respective positions opposite to those shown in Fig. 1. Thus, the current limiting mode based on the all-phase-pulse-off signal B from the OR circuit 25 constituting the all-element-off circuit is selected. In this condition, if any phase current exceeds its positive or negative limit value, the all-phase-pulse-off signal B provided by the OR circuit 25 takes the logical value "0". As a result, the switching pattern A cannot pass the AND circuit 27 and all the outputs of the AND circuit 27 are "0", which turn all phase pulses off. Consequently, all the switching elements in the inverter INV are forced to be off, thus rapidly reducing any unusual output current that can occur in the inverter when the motor IM is being braked.

Although the preceding embodiment of the present invention is described by assuming that the u-phase current exceeds its limit value, the present invention can also be applied to the case where the negative limit value is exceeded by the v-phase or w-phase currents.

Furthermore, the present invention can be achieved not only by the hardware described in connection with the embodiment, but also by software implementation that performs such procedure as selecting the switching pattern that corresponds to the prestored voltage vector when any phase current exceeds its limit value.

In addition, this voltage-type inverter can be applied not only to the induction motor but also to the synchronous motor.

Fig. 3 shows an example of the implementation of the current limiting circuit 21. Fig. 3, the output lines $Lu_1$, $Lu_2$; $Lv_1$, $Lv_2$ and $Lw_1$, $Lw_2$ correspond to the positive and negative polarities of the output current of each phase in the inverter INV, respectively. The respective output lines ($Lu_1$ and $Lu_2$), ($Lv_1$ and $Lv_2$) and ($Lw_1$ and $Lw_2$) will assume three states (0, 0), (1, 0), and (0, 1) for each phase if it is assumed that the comparator produces "1" when the current limiting action is in operation. Among those comparator output lines, $Lu_1$, $Lv_1$, and $Lw_1$ are connected to respective inverting input terminals of AND gates 211, 212, and 213. The remaining output lines $Lu_2$, $Lv_2$ and $Lw_2$ are connected to respective noninverting input terminals of OR gates 214, 215 and 216.

On the other hand, each set of the switching patterns provided by the PWM circuit 1 is transferred through the output terminal of respective AND gates 211, 212, and 213. Each output terminal of the AND gates 211, 212, and 213 is connected to the other input terminal of the respective OR gates 214, 215, and 216. Each output terminal of the OR gates 214, 215, and 216 is connected to the current-limiting mode selecting circuit 22.

As described above, the present invention ensures that she inverter can reduce the output current irrespective of the driving/braking state of the motor, or of the position of the selected voltage vector.

The present invention selectively uses two current limiting modes: when the motor is driven, the current limiting mode performed by the first current limiting circuit is used; when the motor is braked, the current limit mode controlled by the all-phase-pulse off system is used. This system can effectively reduce the rate of current reduction of the output current, and hence can reduce the current ripple during the current limiting action. This is an advantage over the conventional current limiting mode in which only the current limiting by the all-phase-pulse-off system is performed in both driving and braking of the motor.

**Claims**

1. A current limiting apparatus comprising

a voltage-type inverter (INV) connected to and controlling a motor whereby the phases of said inverter comprise switching elements with diodes connected in parallel therewith;
means (4, 11) for detecting the magnitude of the output current of each phase in the voltage-type inverter (INV), and for determining whether the magnitude exceeds a positive or negative limit value;
current limiting circuit means (21) generating an output for turning off the switching element of the corresponding phase in the upper arm of the voltage-type inverter (INV), when the magnitude of any one of the output currents of the voltage-type inverter (INV), exceeds said positive limit value, and for turning off the switching element of the corresponding phase in the lower arm of the voltage-type inverter (INV), when the magnitude of any one of the output currents exceeds said negative limit value;

all-element-off circuit means (25) generating an output for turning off said switching elements of all the phases when the magnitude of any one of the output currents exceeds said positive or negative limit value; and

switching circuit means (26) switched in response to a driving/braking signal of the motor (IM) which is controlled by the voltage-type inverter (INV), said switching circuit (26) performing the current limiting action by selecting the output from said current limiting circuit means (21) when the motor is being driven, or by selecting the output from said all-element-off circuit means (25) when the motor is being braked.

**Patentansprüche**

1. Strombegrenzungsvorrichtung mit

einem Wechselrichter (INV) des Spannungstyps, der mit einem Motor verbunden ist und diesen steuert, wobei die Phasen des Wechselrichters Schaltelemente mit Dioden, die parallel zu diesen geschaltet sind, aufweist,

einer Einrichtung (4, 11) zum Erfassen der Größe des Ausgangsstroms jeder Phase in dem Wechselrichter (INV) des Spannungstyps, und zum Ermitteln, ob die Größe einen positiven oder negativen Grenzwert überschreitet,

einer strombegrenzenden Schaltungseinrichtung (21), die ein Ausgangssignal zum Abschalten des Schaltelements der jeweiligen Phase in dem oberen Arm des Wechselrichters (INV) des Spannungstyps erzeugt, wenn die Größe irgendeines der Ausgangsströme des Wechselrichters (INV) des Spannungstyps den positiven Grenzwert überschreitet, und ein Ausgangssignal zum Abschalten des Schaltelements der entsprechenden Phase in dem unteren Arm des Wechselrichters (INV) des Spannungstyps erzeugt, wenn die Größe von irgendeinem der Ausgangsströme den negativen Grenzwert überschreitet,

einer Schaltungseinrichtung (25) zum Abschalten aller Elemente, die ein Ausgangssignal zum Abschalten der Schaltelemente von allen Phasen erzeugt, wenn die Größe irgendeines der Ausgangsströme den positiven oder den negativen Grenzwert überschreitet, und

einer Schaltschaltungseinrichtung (26), die als Reaktion auf ein Antriebs/Bremssignal des Motors (IM), der durch den Wechselrichter (INV) des Spannungstyps gesteuert wird, anspricht, wobei die Schaltschaltung (26) die strombegrenzende Wirkung dadurch bewirkt, daß das Ausgangssignal von der strombegrenzenden Schaltungseinrichtung (21) ausgewählt wird, wenn der Motor angetrieben wird, oder daß das Ausgangssignal von der Schaltungseinrichtung (25) zum Abschalten aller Elemente ausgewählt wird, wenn der Motor gebremst wird.

**Revendications**

1. Appareil de limitation de courant, comprenant :

-   un inverseur (INV) de type à tension, connecté à un moteur et commandant celui-ci, dans lequel les phases dudit inverseur comprennent des éléments de commutation avec des diodes connectées en parallèle avec ceux-ci ;

-   des moyens (4, 11) pour détecter l'amplitude du courant de sortie de chaque phase dans l'inverseur de type à tension (INV), et pour déterminer si l'amplitude dépasse une valeur limite positive ou négative ;

-   des moyens formant circuit de limitation de courant (21) qui produisent une sortie pour arrêter l'élément de commutation de la phase correspondante dans la branche supérieure de l'inverseur de type à tension (INV) lorsque l'amplitude de l'un quelconque des courants de sortie de l'inverseur de type à tension (INV) dépasse ladite valeur limite positive, et pour arrêter l'élément de commutation de la phase correspondante dans la branche inférieure de l'inverseur de type à tension (INV) lorsque l'amplitude de l'un quelconque des courants de sortie dépasse ladite valeur limite négative ;

-   des moyens formant circuit pour arrêter tous les éléments (25), qui produisent une sortie pour arrêter lesdits éléments de commutation de toutes les phases lorsque l'amplitude de l'un quelconque des courants de sortie dépasse ladite valeur limite positive ou négative ; et

-   des moyens formant circuit de commutation (26) qui sont basculés en réponse à un signal de fonctionnement/freinage du moteur (IM) qui est commandé par l'inverseur de type à tension (INV), ledit circuit de commutation (26) procédant à l'action de limitation de courant en choisissant la sortie desdits moyens formant circuit de limitation de courant (21) lorsque le moteur est en fonctionnement, ou en choisissant la sortie desdits moyens formant circuit pour arrêter tous les éléments (25) lorsque le moteur est freiné.

Fig. 1

EP 0 588 388 B1

## Fig. 2

## Fig. 4     PRIOR ART

# Fig. 3

**Fig. 5**    PRIOR ART

**Fig. 6**    PRIOR ART